(19) **Europäisches Patentamt / European Patent Office / Office européen des brevets**

(11) **EP 1 870 159 A1**

(12) **EUROPEAN PATENT APPLICATION**
published in accordance with Art. 153(4) EPC

(43) Date of publication:
**26.12.2007 Bulletin 2007/52**

(21) Application number: **06731812.1**

(22) Date of filing: **07.04.2006**

(51) Int Cl.:
**B01J 23/46** (2006.01)   **B01J 37/14** (2006.01)
**C01B 7/04** (2006.01)

(86) International application number:
**PCT/JP2006/307876**

(87) International publication number:
**WO 2006/109860 (19.10.2006 Gazette 2006/42)**

(84) Designated Contracting States:
**DE HU NL**

(30) Priority: **08.04.2005 JP 2005111707**

(71) Applicant: **Sumitomo Chemical Company, Limited
Tokyo 104-8260 (JP)**

(72) Inventor: **SEKI, Kohei
7920025 (JP)**

(74) Representative: **Vossius & Partner
Siebertstrasse 4
81675 München (DE)**

(54) **METHOD FOR PRODUCING SUPPORTED RUTHENIUM OXIDE AND METHOD FOR PRODUCING CHLORINE**

(57)   The present invention provides a process for producing supported ruthenium oxide comprising a step of supporting a ruthenium compound on a carrier and then calcining it in an oxygen-containing gas atmosphere, wherein the ruthenium compound has a total of each content of sodium, calcium, magnesium, iron, silicon, aluminum, copper and zinc of 500 weight ppm or less based on the amount of ruthenium.

**EP 1 870 159 A1**

**Description**

TECHNICAL FIELD

The present invention relates to a process for producing supported ruthenium oxide in which ruthenium oxide is supported on a carrier. In addition, the present invention also relates to a process for producing chlorine by oxidation of hydrogen chloride with oxygen by using the supported ruthenium oxide produced by the process as a catalyst.

BACKGROUND ART

Supported ruthenium oxide is useful as a catalyst for producing chlorine by oxidation of hydrogen chloride with oxygen. As its production process, for example, EP0743277A (JP-9-67103-A) discloses that a ruthenium compound is supported on a carrier and then it is calcined in the air. In addition, EP0936184A (JP-2000-229239-A, JP-2000-254502-A and JP-2000-281314-A) discloses a process in which a ruthenium compound is supported on a carrier, it is reduced with hydrazine, sodium borohydride or the like and then oxidized, specifically, calcining it in the air. Furthermore, WO2001/010550 (JP-2002-79093-A) discloses a process in which a ruthenium compound is supported on a carrier, it is calcined in an oxidizing gas, inert gas or reducing gas, and then treated with hydrazine and thereafter oxidized, specifically, calcined in the air.

DISCLOSURE OF THE INVENTION

The present inventor has studied in various ways the process for producing supported ruthenium oxide that includes a step of supporting a ruthenium compound on a carrier and then calcining it in an oxygen-containing gas atmosphere, and a process for producing chlorine by oxidation of hydrogen chloride with oxygen by using the supported ruthenium oxide produced by the process as a catalyst, as disclosed in the above literature. During the study, the inventor has found that specified impurities contained in a raw material ruthenium compound have effects on the catalyst performance of the resultant supported ruthenium oxide. And the inventor has found that a supported ruthenium oxide excellent in catalyst performance can be produced with good reproducibility by use of a ruthenium compound having the impurities content of a specified value or less, having led to the completion of the present invention.

The present invention provides a process for producing supported ruthenium oxide comprising a step of supporting a ruthenium compound on a carrier and then calcining it in an oxygen-containing gas atmosphere, wherein the ruthenium compound has a total of each content of sodium, calcium, magnesium, iron, silicon, aluminum, copper and zinc of 500 weight ppm or less based on the amount of ruthenium.

In addition, the present invention provides a process for producing chlorine, wherein hydrogen chloride is oxidized with oxygen in the presence of the supported ruthenium oxide produced by the above process.

According to the present invention, a supported ruthenium oxide excellent in catalyst performance can be produced with good reproducibility, and chlorine can be efficiently produced with good reproducibility by oxidation of hydrogen chloride with oxygen by using the supported ruthenium oxide thus obtained as a catalyst.

MODE FOR CARRYING THE INVENTION

The ruthenium compound used as the raw material in the present invention includes, for example, a halide such as $RuCl_3$ and $RuBr_3$, a halogeno-acid salt such as $K_3RuCl_6$ and $K_2RuCl_6$, an oxo-acid salt such as $K_2RuO_4$, an oxyhalide such as $Ru_2OCl_4$, $Ru_2OCl_5$ and $Ru_2OCl_6$, a halogeno complex such as $K_2[RuCl_5(H_2O)_4]$, $[RuCl_2(H_2O)_4]Cl$, $K_2[Ru_2OCl_{10}]$ and $Cs_2[Ru_2OC_{14}]$, an ammine complex such as $[Ru(NH_3)_5H_2O]Cl_2$, $[Ru(NH_3)_5Cl]Cl_2$, $[Ru(NH_3)_6]Cl_2$, $[Ru(NH_3)_6]Cl_3$ and $[Ru(NH_3)_6]Br_3$, a carbonyl complex such as $Ru(CO)_5$ and $Ru_3(CO)_{12}$, a carboxylate complex such as $[Ru_3O(OCOCH_3)_6(H_2O)_3]OCOCH_3$ and $[Ru_2(OCOR)_4]Cl$ (R = alkyl group having 1 to 3 carbon atoms), a nitrosyl complex such as $K_2[RuCl_5(NO)]$, $[Ru(NH_3)_5(NO)]Cl_3$, $[Ru(OH)(NH_3)_4(NO)](NO_3)_2$ and $[Ru(NO)](NO_3)_3$, a phosphine complex, an amine complex, an acetylacetonate complex, and the like. Of these, a halide is preferably used, and particularly chloride is preferably used. Additionally, as a ruthenium compound, its hydrate may be used according to need, and two kinds or more of it may be used.

In a ruthenium compound are normally contained impurities attributable to a raw material during its preparation, specifically, elements such as sodium, magnesium, aluminum, silicon, calcium, iron, copper, zinc, rhodium, palladium, iridium, platinum and gold as a chemical element or a compound. Depending on the kinds of their impurities, the catalyst performance of the resultant supported ruthenium oxide, particularly the performance as a catalyst for producing chlorine by oxidizing hydrogen chloride with oxygen is inversely affected. In particular, sodium, magnesium, aluminum, silicon, calcium, iron and copper are liable to decrease the catalyst performance of the resulting supported ruthenium oxide catalyst. Thus, in the present invention, as a ruthenium compound of a raw material, a ruthenium compound in which the total of each content of sodium, magnesium, aluminum, silicon, calcium, iron, copper and zinc is a specified value or less, specifically, a ruthenium compound in which the total of the contents is 500 weight ppm or less based on the amount of the ruthenium of the ruthenium compound is used. This makes it possible to produce with good reproducibility supported ruthenium oxide excellent in catalyst performance, particularly, initial activity.

In addition, albeit to lesser extents than those of the above regulated sodium, magnesium, aluminum, silicon, calcium, iron, copper and zinc, even rhodium, palladium, iridium, platinum and gold are liable to decrease the catalyst performance of the resulting supported ruthenium oxide catalyst. Accordingly, as a ruthenium compound of a raw material, it is preferable to use a ruthenium compound that satisfies the above regulation and also has the total of each content of rhodium, palladium, iridium, platinum and gold of a specified value or less, specifically, the total of 1500 weight ppm or less based on the amount of the ruthenium of the ruthenium compound.

The ruthenium compound in which the amounts of impurities are the specified values or less as mentioned above may be selected and provided from commercially available high-purity articles, or may be prepared by purifying a ruthenium compound in which the amounts of impurities exceed the specified values by means of rectification, crystallization or washing. The amounts of impurities in a ruthenium compound can be determined, for example, by inductively coupled plasma analysis (hereinafter, referred to as ICP analysis), atomic absorption analysis, ion chromatography analysis or the like. In particular, ICP analysis is preferred due to high accuracy and also a wide range of elements to be determined.

The supported ruthenium oxide is produced by supporting a ruthenium compound as mentioned above on a carrier and then calcining it in an oxygen-containing gas atmosphere. The carrier includes, for example, an oxide or a mixed oxide of elements selected from aluminum, silicon, titanium, zirconium and niobium, activated carbon, and the like. Mixtures of two or more of the carriers may be used as required. Of these, alumina, silica, titanium oxide and zirconium oxide are preferably used, and in particular, titanium oxide having the rutile crystalline structure is preferably used.

The methods for supporting a ruthenium compound on a carrier include, for example, a method of impregnating a solution of a ruthenium compound in a carrier, a method of immersing a carrier in a solution of a ruthenium compound and adsorbing the ruthenium compound in a carrier, and the like. Additionally, after supported, as required, reduction treatments may be carried out, for example, as described in Patent Documents 2 to 5.

After the ruthenium compound is supported on a carrier, the supported ruthenium oxide is produced by calcining it in an oxygen-containing gas atmosphere. As the oxygen-containing gas, air may be used or pure oxygen may be used. The calcining temperature is normally from 100 to 500°C, preferably from 200 to 400°C.

The ratio of weight of ruthenium oxide/carrier in the supported ruthenium oxide is normally from 0.1/99.9 to 20/80, preferably from 0.5/99.5 to 15/85, and the ratio of use of the ruthenium compound to the carrier may be controlled so as to be in the range. When the amount of ruthenium oxide is too small, the catalyst activity may be insufficient; when the amount is too large, the case is inadvantageous in terms of cost. Additionally, the oxidation number of the ruthenium in ruthenium oxide is normally +4 and ruthenium oxide is ruthenium dioxide ($RuO_2$) in this case, and ruthenium of other oxidation numbers or other forms of ruthenium oxide may be contained.

If supported ruthenium oxide thus produced is used as a catalyst and hydrogen chloride is oxidized with oxygen in the presence of the catalyst, chlorine can be efficiently produced with good reproducibility. The system of the reaction may be a fixed bed system or a fluidized bed system. Usually, a gas phase reaction such as a fixed bed gas phase distribution system or a movable bed gas phase distribution system is advantageously adopted.

The oxidation reaction is an equilibrium reaction; if the reaction is carried out at a too high temperature, the equilibrium conversion rate is decreased, therefore the reaction is preferably carried out at a relatively low temperature. The reaction temperature is normally from 100 to 500°C, preferably from 200 to 450°C. In addition, the reaction pressure is normally about from 0.1 to 5 MPa. As an oxygen source, air may be used or pure oxygen may be used. The theoretical molar amount of oxygen to hydrogen chloride is 1/4 mole; however, normally, oxygen at 0.1 to 10 times of the theoretical amount is used. In addition, the supply rate of hydrogen chloride is expressed by a gas supply rate for 1L of the catalyst (L/h; 0°C, in terms of 1 atmosphere), i.e., by GHSV, and is normally about from 10 to 20000 $h^{-1}$.

EXAMPLES

Hereinafter examples of the present invention will be illustrated; however, the present invention is by no means limited to those. In the examples, parts and % representing the amount of use and contents are by weight unless otherwise indicated.

Reference Example 1 (Preparation of a Carrier)

100 parts of an α-alumina powder [AES-12 available from Sumitomo Chemical Co., Ltd.], 50 parts of a titanium oxide powder [STR-60R available from Sakai Chemical Industry Co., Ltd., 100% rutile type] and 3 parts of methyl cellulose [Metolose 65SH-4000 available from Shin-Etsu Chemical Co., Ltd.] were mixed and then 31 parts of purified water, 20 parts of titanium oxide sol [CSB available from Sakai Chemical Industry Co., Ltd., $TiO_2$ content of 38%], 0.6 part of glycerin and 3 parts of polyether-based dispersing agent [Unirube 50MB-26 available from NOF Corp.] were added thereto. This mixture was extruded in a noodle form having a diameter of 3.0 mm$\phi$ and dried at 60°C for 2 hours, and then cut into a length of about from 3 to 5 mm. The resulting molded article was heated from room temperature to 800°C over 2.2 hours in the air and then held and calcined at the same temperature for 3 hours to obtain a white carrier composed of a mixture of titanium oxide and $\alpha$-alumina.

Example 1

(Production of Supported Ruthenium Oxide)

Into 20.0 g of the carrier prepared in Reference Example 1 was impregnated an aqueous solution prepared by dissolving 0.747 g of ruthenium chloride hydrate [$RuCl_3 \cdot nH_2O$ available from Furuya Metal Co., Ltd., Ru content of 41.5%] in 3.7 g of purified water and then the resulting material was left to stand at 24°C for 15 hours. 21.1 g of the resulting solid was heated in an air flow from room temperature to 250°C over 1.3 hours and then held and calcined at the same temperature for 2 hours to obtain 20.3 g of blue gray supported ruthenium oxide. Impurities contained in ruthenium chloride hydrate used as the raw material were determined by the ICP analysis and are shown in Table 1 as weight ratios to the ruthenium. In the table, the designation "<2" means less than 2 ppm of a lower detection limit.

(Production of Chlorine)

1.0 g of the obtained supported ruthenium oxide was diluted with 12 g of $\alpha$-alumina spherical particles having a diameter of 2mm [SSA995 available from Nikkato Corp.] and the resulting material was loaded into a nickel reaction tube (inner diameter of 14 mm) and further in the gas inlet portion of the reaction tube was filled with 12 g of $\alpha$-alumina spherical particles which is the same as the above as a preheat layer. Thereinto were supplied a hydrogen chloride gas at a rate of 0.214 mol/h (4.8 L/h in terms of 0°C, 1 atm) and an oxygen gas at a rate of 0.107 mol/h (2.4 L/h in terms of 0°C, 1 atm) at atmospheric pressure, the catalyst layer was heated to 282 to 283°C and a reaction was carried out. In 1.5 hours after the reaction initiation, the gas from the reaction tube outlet was sampled for 20 minutes by passing it through a 30% aqueous potassium iodide solution and the amount of formation of chlorine by an iodometric titration method was measured to evaluate the formation rate (mol/h) of the chlorine. From the formation rate of the chlorine and the supply rate of the above hydrogen chloride, the conversion rate of the hydrogen chloride was calculated by means of the equation below and is shown in Table 1.

$$\text{Conversion rate of hydrogen chloride (\%)} = [\text{Formation rate of chlorine (mol/h)} \times 2 \div \text{Supply rate of hydrogen chloride (mol/h)}] \times 100$$

Example 2

(Production of Supported Ruthenium Oxide)

Into 20.0 g of the carrier prepared in Reference Example 1 was impregnated an aqueous solution prepared by dissolving 0.794 g of ruthenium chloride hydrate [$RuCl_3 \cdot nH_2O$ available from Furuya Metal Co., Ltd., Ru content of 39.1%] in 3.7 g of purified water and then the resulting material was left to stand at 24°C for 15 hours. 21.1 g of the resulting solid was heated in an air flow from room temperature to 250°C over 1.3 hours and then held and calcined at the same temperature for 2 hours to obtain 20.3 g of blue gray supported ruthenium oxide. Impurities contained in the ruthenium chloride hydrate used as the raw material were determined by the ICP analysis and are shown in Table 1 as weight ratios to the ruthenium.

(Production of Chlorine)

Chlorine was produced in the same manner as Example 1 by use of the obtained supported ruthenium oxide as a catalyst. The conversion rate of the hydrogen chloride is shown in Table 1.

Comparative Example 1

(Production of Supported Ruthenium Oxide)

Into 20.0 g of the carrier prepared in Reference Example 1 was impregnated an aqueous solution prepared by dissolving 0.775 g of ruthenium chloride hydrate [$RuCl_3 \cdot nH_2O$ available from N. E. Chemcat Corp., Ru content of 40.0%] in 3.7 g of purified water and then the resulting material was left to stand at 24°C for 15 hours. 21.1 g of the resulting solid was heated in an air flow from room temperature to 250°C over 1.3 hours and then held and calcined at the same temperature for 2 hours to obtain 20.3 g of blue gray supported ruthenium oxide. Impurities contained in the ruthenium chloride hydrate used as the raw material were determined by the ICP analysis and are shown in Table 1 as weight ratios to the ruthenium.

(Production of Chlorine)

Chlorine was produced in the same manner as Example 1 by use of the obtained supported ruthenium oxide as a catalyst. The conversion rate of the hydrogen chloride is shown in Table 1.

Table 1

| Examples | | Example 1 | | Example 2 | | Comparative Example 1 | |
|---|---|---|---|---|---|---|---|
| Weight ratio/Ru (ppm) | Na | 210 | | 72 | | 155 | |
| | Mg | 26 | | 15 | | 88 | |
| | Al | <2 | | <2 | | 208 | |
| | Si | <2 | 246 | 15 | 120 | 25 | 584 |
| | Ca | 5 | | 5 | | 8 | |
| | Fe | <2 | | 5 | | 90 | |
| | Cu | <2 | | <2 | | 5 | |
| | Zn | 5 | | 8 | | 5 | |
| | Rh | 111 | | 412 | | <2 | |
| | Pd | 41 | | 210 | | <2 | |
| | Ir | 36 | 319 | 443 | 1805 | <2 | <10 |
| | Pt | 96 | | 502 | | <2 | |
| | Au | 39 | | 238 | | <2 | |
| Conversion rate of Hydrogen Chloride (%) | | 9.8 | | 9.4 | | 9.1 | |

Reference Example 2 (Preparation of a Carrier)

100 parts of an $\alpha$-alumina powder [AES-12 available from Sumitomo Chemical Co., Ltd.], 100 parts of a titanium oxide powder [STR-60R available from Sakai Chemical Industry Co., Ltd., 100% rutile type] and 4 parts of methyl cellulose [Metolose 65SH-4000 available from Shin-Etsu Chemical Co., Ltd.] were mixed and then 50 parts of purified water and 26 parts of titanium oxide sol [CSB available from Sakai Chemical Industry Co., Ltd., $TiO_2$ content of 38%] were added thereto. This mixture was extruded in a noodle form having a diameter of 1.5 mm$\phi$ and dried at 60°C for 2 hours, and then cut into a length of about from 3 to 5 mm. The resulting molded article was heated from room temperature to 630°C over 2 hours in the air and then held and calcined at the same temperature for 3 hours to obtain a white carrier composed of a mixture of titanium oxide and $\alpha$-alumina.

Example 3

(Production of Supported Ruthenium Oxide)

Into 20.0 g of the carrier prepared in Reference Example 2 was impregnated an aqueous solution prepared by dissolving 1.699 g of ruthenium chloride hydrate [$RuCl_3 \cdot nH_2O$ available from Furuya Metal Co., Ltd., Ru content of 37.3%] in 4.1 g of purified water and then the resulting material was left to stand at 24°C for 15 hours. 20.1 g out of 21.1 g of the resulting solid was taken, and was heated in an air flow from room temperature to 250°C over 1.3 hours and then held and calcined at the same temperature for 2 hours to obtain 18.9 g of blue gray supported ruthenium oxide. Impurities contained in the ruthenium chloride hydrate used as the raw material were determined by the ICP analysis and are shown in Table 2 as weight ratios to the ruthenium.

(Production of Chlorine)

Chlorine was produced in the same manner as Example 1 by use of the obtained supported ruthenium oxide as a catalyst. The conversion rate of the hydrogen chloride is shown in Table 2.

Example 4

(Production of Supported Ruthenium Oxide)

Into 20.0 g of the carrier prepared in Reference Example 2 was impregnated an aqueous solution prepared by dissolving 1.536 g of ruthenium chloride hydrate [$RuCl_3 \cdot nH_2O$ available from Furuya Metal Co., Ltd., Ru content of 39.1%] in 4.1 g of purified water and then the resulting material was left to stand at 24°C for 15 hours. 19.8 g out of 21.8 g of the resulting solid was taken, and was heated in an air flow from room temperature to 250°C over 1.3 hours and then held and calcined at the same temperature for 2 hours to obtain 18.9 g of blue gray supported ruthenium oxide. Impurities contained in the ruthenium chloride hydrate used as the raw material were determined by the ICP analysis and are shown in Table 2 as weight ratios to the ruthenium.

(Production of Chlorine)

Chlorine was produced in the same manner as Example 1 by use of the obtained supported ruthenium oxide as a catalyst. The conversion rate of the hydrogen chloride is shown in Table 2.

Comparative Example 2

(Production of Carried Ruthenium Oxide)

Into 80.0 g of the carrier prepared in Reference Example 2 was impregnated an aqueous solution prepared by dissolving 6.079 g of the ruthenium chloride hydrate used in Comparative Example 1 [$RuCl_3 \cdot nH_2O$ available from N. E. Chemcat Corp., Ru content of 40.0%] in 14.5 g of purified water and then 50.0 g out of 100.7 g of the resulting material was taken and left to stand at 24°C for 15 hours. 21.1 g out of 43.8 g of the resulting solid was taken, and was heated in an air flow from room temperature to 250°C over 1.3 hours and then held and calcined at the same temperature for 2 hours to obtain 20.8 g of blue gray supported ruthenium oxide. Impurities contained in the ruthenium chloride hydrate used as the raw material were determined by the ICP analysis and are shown in Table 2 as weight ratios to the ruthenium.

(Production of Chlorine)

Chlorine was produced in the same manner as Example 1 by use of the obtained supported ruthenium oxide as a catalyst. The conversion rate of the hydrogen chloride is shown in Table 2.

Table 2

| Examples | | Example 3 | | Example 4 | | Comparative Example 2 | |
|---|---|---|---|---|---|---|---|
| Weight ratio/ Ru (ppm) | Na | 271 | 472 | 46 | 117 | 155 | 584 |
| | Mg | 66 | | 34 | | 88 | |
| | Al | 27 | | 4 | | 208 | |
| | Si | 66 | | <2 | | 25 | |
| | Ca | 15 | | 10 | | 8 | |
| | Fe | 21 | | 17 | | 90 | |
| | Cu | 4 | | 2 | | 5 | |
| | Zn | 2 | | 4 | | 5 | |
| | Rh | 2 | 16 | <2 | 12 | <2 | <10 |
| | Pd | 7 | | 7 | | <2 | |
| | Ir | 2 | | <2 | | <2 | |
| | Pt | <2 | | <2 | | <2 | |
| | Au | 5 | | 5 | | <2 | |
| Conversion rate of Hydrogen Chloride (%) | | 17.1 | | 16.9 | | 16.0 | |

INDUSTRIAL APPLICABILITY

According to the present invention, a supported ruthenium oxide excellent in catalyst performance can be produced with good reproducibility, and chlorine can be efficiently produced with good reproducibility by oxidation of hydrogen chloride with oxygen by use of the supported ruthenium oxide thus obtained as a catalyst.

**Claims**

1. A process for producing supported ruthenium oxide, comprising a step of supporting a ruthenium compound on a carrier and then calcining it in an oxygen-containing gas atmosphere, wherein the ruthenium compound has a total of each content of sodium, calcium, magnesium, iron, silicon, aluminum, copper and zinc of 500 weight ppm or less based on the amount of ruthenium.

2. The process according to claim 1, wherein
a total of each content of rhodium, palladium, iridium, platinum and gold in the ruthenium compound is 1500 weight ppm or less based on the amount of ruthenium.

3. A process for producing chlorine, wherein
hydrogen chloride is oxidized with oxygen in the presence of the supported ruthenium oxide produced by the process according to claim 1 or 2.

**INTERNATIONAL SEARCH REPORT**

| International application No. |
|---|
| PCT/JP2006/307876 |

A. CLASSIFICATION OF SUBJECT MATTER
*B01J23/46*(2006.01), *B01J37/14*(2006.01), *C01B7/04*(2006.01)

According to International Patent Classification (IPC) or to both national classification and IPC

B. FIELDS SEARCHED

Minimum documentation searched (classification system followed by classification symbols)
B01J21/00-38/74, C01B7/04

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2000-229239 A  (Sumitomo Chemical Co., Ltd.),<br>22 August, 2000 (22.08.00),<br>Claims<br>& EP 936184 A2        & US 2002/28173 A1<br>& US 2005/31529 A1 | 1,2<br>3 |
| A | JP 2001-321668 A  (Furuya Metal Co., Ltd.),<br>20 November, 2001 (20.11.01),<br>Claims<br>(Family: none) | 1-3 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    22 May, 2006 (22.05.06) | Date of mailing of the international search report<br>    30 May, 2006 (30.05.06) |
|---|---|
| Name and mailing address of the ISA/<br>    Japanese Patent Office | Authorized officer |
| Facsimile No. | Telephone No. |

Form PCT/ISA/210 (second sheet) (April 2005)

## REFERENCES CITED IN THE DESCRIPTION

**Patent documents cited in the description**

- EP 0743277 A
- JP 9067103 A
- EP 0936184 A
- JP 2000229239 A
- JP 2000254502 A
- JP 2000281314 A
- WO 2001010550 A
- JP 2002079093 A